# EUROPEAN PATENT SPECIFICATION

(11) **EP 1 453 654 B1**
(45) Date of publication and mention of the grant of the patent: **19.04.2006**
(21) Application number: 02803341.3
(22) Date of filing: 22.11.2002
(51) Int. Cl.: B29C 59/02, B29C 59/04, B44B 5/02

(54) **A DEVICE FOR PROCESSING A THREE DIMENSIONAL STRUCTURE INTO A SUBSTRATE**
VORRICHTUNG ZUR VERARBEITUNG EINER DREIDIMENSIONALEN KONSTRUKTION ZU EINEM TRÄGER
PROCEDE DE TRAITEMENT D'UNE STRUCTURE TRIDIMENSIONNELLE POUR EN FAIRE UN SUBSTRAT

(30) Priority: 23.11.2001 US 331989 P
(43) Date of publication of application: 08.09.2004
(73) Proprietor: Glud & Marstrand A/S, 8723 Losning (DK)
(72) Inventor: TIDEMANN, Jesper, DK-8723 Losning (DK); ZUBCEVIC, Esad, DK-7100 Vejle (DK)
(74) Representative: Plougmann & Vingtoft A/S
(86) International application number: PCT/DK2002/000787
(87) International publication number: WO 2003/043801

(56) References cited:
- WO-A-00/40421
- WO-A-98/38137
- US-A- 4 615 204
- PATENT ABSTRACTS OF JAPAN vol. 005, no. 072 (M-068), 14 May 1981 (1981-05-14) & JP 56 024116 A (SHINSEI KOGYO KK), 7 March 1981 (1981-03-07)

## Description

### Field of the invention

This invention relates generally to a device and a process for processing a substrate, e.g. forming a three-dimensional structure, nano-structure, hologram or similar relief diffraction pattern into a substrate by use of a re-configurable mould.

### Background of the invention

Various techniques for cutting and forming a substrate exist. Cutting is done in different ways e.g. punching. Normally the cutting machine is provided with co-operating edges used to cut the material. Especially when cutting fine geometry's where allowable variations in the tolerances are relatively small, the tool with the cutting edges need to be renewed or renovated often, due to tear and wear of the tool. This makes the process relatively expensive.

Various casting techniques for forming microstructure surfaces exist. Typically a mould holds a liquid resin on the substrate during curing of the resin whereby the resin forms the microstructure. The mould may be provided with a rotating drum having a three-dimensional relief pattern forming the microstructure, or the mould may be provided with a planar plate having a relief pattern attached to one side. In order to create visible distortion in the diffraction pattern, the tolerances must be low and accordingly, the cost for making a mould is relatively high. The moulds have to be replaced after a number of moulding cycles, as the moulds are incorporated e.g. in rotational drums for mass replication of holograms, the costs for replacing moulds being high.

Only very small displacements of the mould in relation to the substrate during the casting will reduce the quality of the cast. Accordingly, existing systems for casting microstructures use highly rigid moutds and rigid devices for the casting process. The rigidity enables control over the casting process e.g. by reducing the risk of unwanted vibrations in the moulds.

When casting structures in liquid resins, the rigidity of the casting devices and moulds have almost no negative effect and therefore the makers of casting machines seems to strive towards more rigidity.

However, when casting in non-liquid materials such as directly in steel plates or similar "hard" substrates, the rigidity disables the machine to take up tolerances occurring in the substrate. As an example, a metal plate will usually have a non-planar surface. When subjected to a completely rigid mould in a completely rigid machine, the deviations of the non-planar surface may easily be visually detectable in the structure. As an example, the non-planarity of the plate may be replicated in a non-even embossing depth, which gives visually detectable uneven reflection from the surface of the structure.

JP 5624116 discloses a stamping convex die for stamping letters and patterns consisting of an elastic material on a stamp block opposite to a heater through a shock absorber, such as a sponge rubber. The convex die is depressed onto a sealer material by moving the stamp block downward, thereby sealing and stamping simultaneously.

WO 98 38137 discloses a process and a device for manufacturing networks of microlenses. A number of molds having grooved non-malleable surfaces are inserted between a number of plates of malleable material. They are placed in a heated housing, and a roughly uniform pressure is applied perpendicular to the surfaces of the plates, which causes production of convex surfaces of microlenses on the sides of the plates.

WO 00 40421 discloses a method of replicating a surface relief in a non-metallic layer held by a metal substrate. The surface relief is replicated In the layer by pressing an object comprtsing a surface into said layer so as to change surface properties of the layer, the surface relief forming part of the surface of the object.

US 4,615,204 discloses a drawing apparatus of the type In which a lower punch slide moves upward to draw a blank damped between a moveable die and a stationary blank holder. The apparatus comprises an adjustable ram, which is electrically driven to move upward and downward for thereby adjusting the bottom dead position of the punch. Hereby the upper end of the punch is made substantially flush with the upper end surface of the blank holder when the punch Is In its bottom dead position.

### Description of the invention

It is a primary object of the present invention to provide a technique and a device for processing, such as cutting or casting or embossing, structures into a substrate, e.g. into non-liquid materials or even into hard materials, and which overcomes the above mentioned problems.

Accordingly, the present invention relates to a device according to claim 1.

The flexible force absorbing means is adapted to equalise the pressure along the core and/or too, so that possible sporadic unevenness along the length of the core and/or tool do not result in a higher local pressure in the area of the unevenness, as the force absorbing means will absorb/equalise such high pressure.

In some embodiments the flexible force absorbing means may be resilient. Thus the flexible force absorbing means may return to an initial position when pressure applied from the tool plane and/or the reaction plane is removed, In some embodiments the flexible force absorbing means may be chosen such that it is only elastically deformed when pressure is applied to said means. A reversible process may take place when the flexible force absorbing means perform the following steps; uncompressed state (prior to application of pressure from the tools) - compressed state (during application of pressure from the tools) - uncompressed state (subsequent to application of pressure from the tools). As the flexible force absorbing means may be only elastically deformed the thickness of the means may be the same before and after application of pressure. When the flexible force absorbing means is resillent the means may have spring like properties. An advantage of the resilient absorbing means may be that said means may be re-used contrary to non-flexible absorbing means which may be plastically deformed and thus must be replaced by a non-plastically-deformed piece prior to further use of the device.

The flexible force absorbing mean may be adapted to be elastically deformable, so as to locally absorb the forces applied by the planes to a substrate.

The flexible force absorbing means may be adapted to be elastically deformable at room temperature and/or at atmospheric pressure. In some embodiments room temperature may be between 0, degrees Celsius and 100 degrees Celsius. In some embodiments it may be essential that the temperature of the air/space surrounding the device is such that a worker may operate the machine without encapsulating the machine or without dressing the worker in clothing protecting him from extreme temperatures. Analogously it may be essential that the pressure is such that a worker may operate the machine without encapsulating the machine and/or the worker. Thus atmospheric pressure may, in this application, be seen to be pressures in which a human being can survive for a longer or shorter period of time. The tool plane and/or the reaction plane may be heated during operation. A substrate being processed may be heated so as to soften the substrate.

In some embodiments it may be essential to avoid any encapsulation of the device which reduces the operation speed e.g. resulting from complicated handling of the work pieces. Naturally in some countries there may be legal requirements regarding encapsulation of the device which may be followed. The operation speed may be 0-10.000 meters of substrate per hour such as 2.000-8.000 meters per hour, such as 4.000-5.000 meters per hour. The work pieces/substrates may be plates of material e.g. plastic or metal, being 1 meter long. The pieces/substrates may be coils.

The movements of the tool plane and the reaction plane may be synchronised vertically and/or hortzontally. If the two planes are provided as a stamping process means for moving a work piece through the stamping process may be synchronised with the stamping process. If the two planes are provided as one or more drums for rotative processing of the first layer said drums may be synchronised.

In an embodiment a tool may comprise a tool plane and a reaction plane provided with co-operating edges for cutting a substrate. The tool may be used for cutting such as die-cutting or punching e.g. in an eccentric press, but could also be used in a rotative drum adapted to cut substrate with co-operating edges. Said drum may be adapted to cut and/or shape e.g. emboss a microstructure into a substrate.

The tool may also be used for micro embossing, macro embossing, marking up cutting-lines on a sheet/plate.

Another embodiment comprises a tool having a tool plane and a reaction plane wherein at least one of either the tool plane or the reaction plane may be adapted to shape at least a first layer of the substrate into a predefined form. Such tool may be used in a hydraulic press for shaping a substrate, but could also be used in a rolling process.

The tool plane could be a hard plane surface corresponding to the known tool planes of regular stamping machines. The stamp could be moved up and down by a rigid cam disc, linear actuators or the like. The stamp should provide a sufficient pressure against the substrate and the reaction plane to emboss the structure into the substrate. The tool plane or the reaction plane could both be provided with rigidity since the flexible force absorbing means of the tool plane or the reaction plane or both the tool plane and the reaction plane, will take up tolerances.

Preferably, the flexible force absorbing means are provided so that the flexibility may be changed. According to an embodiment of the invention, the flexible force absorbing means are provided in the form of a resilient adhesive tape attached to the surface of the tool plane and/or to the surface of the reaction plane forming a force absorbing layer of the device. The resiliency and thus the capability of the device to take up tolerances may easily be changed e.g. by changing the type of adhesive tape of the thickness of the adhesive tape.

The flexible force absorbing means may comprise at least one force absorbing layer provided in the multiple layer construction and/or being attached to the reaction plane.

Both the tool plane and the reaction plane may be provided with a force absorbing layer.

Preferably, the flexible force absorbing layer is provided in the multiple layer construction between the core and the tool. This embodiment is advantageous, as the absorbing layer then absorbs all sporadic unevenness along the entire length of the core and/or tool.

The flexible force absorbing means may, according to another embodiment, be provided as a hard plane e.g. of metal being attached to the surface of the tool plan and/or the reaction plane and provided with bouncing springs facing the tool plane and/or the reaction plane. The springs may either be provided with an adjustable characteristic or be detachably mounted for replacement with springs having a characteristic matching the individual embossing tasks and substrate materials.

According to a preferred embodiment of the invention, the tool plane is a cylindrically shaped drum for rotative embossing of the tree dimensional structure and the reaction plane is likewise a cylindrical drum or nip roll for providing the necessary counter pressure.

The force absorbing layer will be capable of raking up at least a substantial part of the deviation by compression of the layer. It will further be preferred that the material for the force absorbing layer is selected so that the force required to compress the material should be less than the force required for embossing the structure Into the substrate, i.e. the non-compressed flexible layer should be softer than the surface of the substrate.

Preferably, the force absorbing layer is selected with a thickness In the range of 0,1-5 mm, such as 0,2-4,5 mm, such as 0,3-4,0 mm such as 0,4-3,5 mm, such as 0,53 mm, such as 0,6-2,5 mm, such as 0,7-2,0 mm, such as in the size of 1,5 mm.

Preferably the absorbing layer is selected with an elasticity enabling the layer to provide a force to the hard substrate, which force extends the yield point of the hard substrate at a given rate of compression γ, and wherein the thickness of the flexible force absorbing layer at that rate of compression γ extents the planar deviation δ.

The force absorbing layer could be provided in the form of a double sided adhesive tape for attaching at least one tool, such as a shim, to the outer surface of the core, e.g. selected with a thickness In the range of 0,1-0,5 mm, such as In the range of 0,20-0,4 mm, such as in the range of 0,22-0.3 mm, such as In the range of 0,22-0,26 mm. such as 0,24 mm.

The core may be provided with a steel surface, so that it Is easy to provide an adhesive tape having the necessary attachment strength. As an example, the double sided adhesive tape 3M-type 9586 F gives a sufficient adhesion to steel. Moreover, It will be easy to provide an embossing or reaction surface with suffident rigidity from steel. For ensuring the best adhesion, a roughness in the range of 1-100 microns of the steel surface will be preferred. Thereby it will be possible to provide an adhesion to steel in the range of 6-12 N/cm, such as in the range of 7-11 N/cm, such as in the range of 8-10 N/cm, such as 9 N/cm.

Preferably, one or both sides of the double sided adhesive tape are provided with an acrylic based adhesive and preferably the tape is provided with a dynamic shear in the range of 50-100 N/cm², e.g. in the size of 70 N/cm².

The adhesive layer of the tape may be provided with a permanent adhesion so that it will be possible to reuse the tape and to refit the shims to the flexible layer, which will make refitting easler and faster. Thus, the invention provides a much more flexible device, as the tool can be changed very easy.

The processing may comprise embossing of a three-dimensional structure into the substrate, such as a nano-structure into the substrate, or it may comprise embossing of a nano-structure into a metallic substrate.

The tool plane may be a drum for rotative processing of a first layer of a multiple layer substrate, the first layer having a first degree of hardness and the succeeding layers having a second degree of hardness, said drum having:
- a core with a substantially inflexible outer surface,
- a flexible force absorbing layer with a third degree of hardness, the flexible forte absorbing layer being peripherally attached to the core, and
- a matrix having the three dimensional structure, the matrix being peripherally attached to the flexible force absorbing layer,
wherein the flexible force absorbing layer is selected so that the third degree of hardness is higher than the first degree of hardness and lower than the second degree of hardness so as to ensure that the three dimensional structure is processed into the first layer but not into subsequent layers.

According to a second aspect, the present invention relates to a method according to claim 27

The substrate mentioned in connection with any of the above-mentioned aspects may be selected from the group consisting of lacquers, carton, cardboard, polymers, printing inks, plastics, metal such as tin, aluminium, copper, lead, steel. The Brinell-hardness (HB 10) of the substrate may range from 10 N/mm² to 1000 N/mm².

The present invention provides a technique for processing a substrate at high speeds, (such as 1-2 meter sheet material per hour) and at room-temperature. In particular, the technique should be applicable for high-speed production lines for manufacturing e.g. food containers.

Of course the pressure applied to the substrate should be so high that the wanted shape is embossed or punched or cut in the substrate. Preferably, the pressure is within the range or 981-9810 N/cm² (100-1000 kg/cm²). The combination of pressure and type of substrate with be chosen so as to obtain the best result of the processing.

Due to this device, it is possible to control a processing of a substrate held by a bearing material in an easy way, and where a deformation of the bearing material for core material) is avoided due to the use of the flexible force absorbing layer, e.g. the double sided adhesive tape.

### Detailed description of the invention

An einbodiment of the invention will now be described in details with reference to the drawing in which:
Fig. 1 shows an embossing drum according to the present invention,
Fig. 2 shows a side view of the drum shown in Fig. 1,
Fig. 3 shows an alternative embodiment of a device with an upper pressing member In the form of an embossing stamp,
Fig. 4, 5 and 6 show diagrams of the principles of the flexible attachment of shims to an embossing device, and
Fig. 7 shows a machine for embossing a three dimensional structure into a substrate.

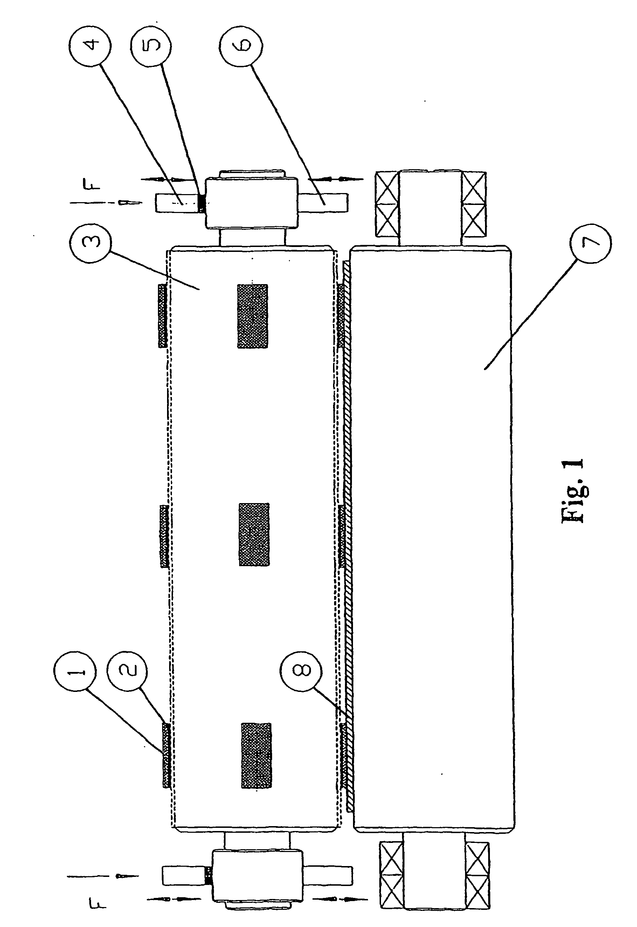

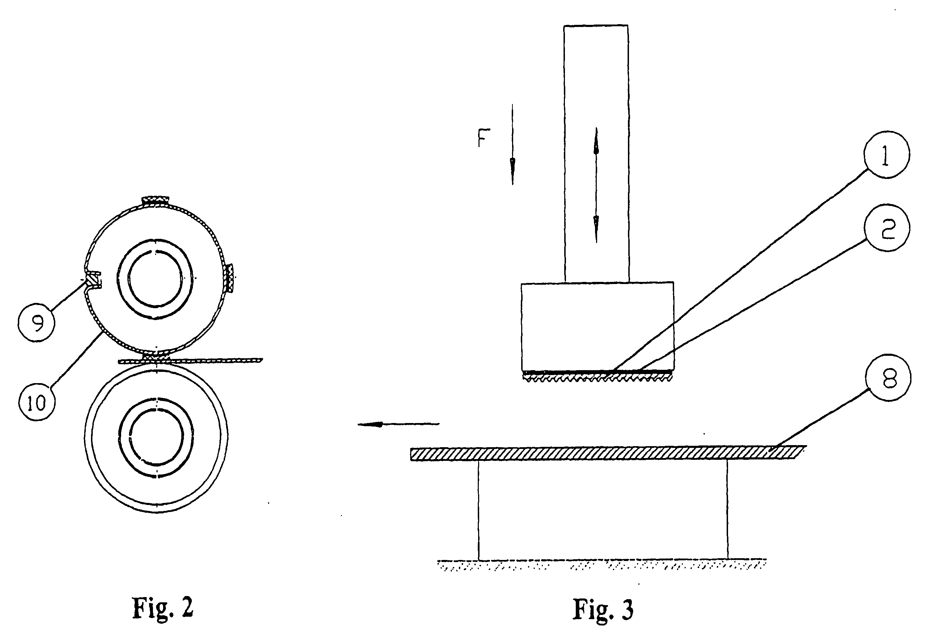

The embodiment hereinafter is with respect to embossing of holograms into hard surfaces e.g. of steel plates. Referring to Fig. 2, a device according to the invention comprises an embossing roll 3 and a nip roll 7. The nip roll provides the necessary counter pressure - the surface of the nip roller corresponds to the reaction plane. The embossing roll is provided with a number of shims 1 attached to the roll by a resillent adhesive tape 2. The embossing roll and the nip roll is carried by bearings 4, 6. One of the rolls (in Fig. 1, the embossing roll 3) Is provided with means for adjusting the pressure between the embossing roll and the nip roll by adjusting the gap between the rolls. The absorbing layer 5 in the bearing absorbs the pressure. The absorbing layer 5 may be distorted by predetermined "retaining force" In order to control the upwards movement of the embossing roll 3 when introducing a sheet material 8 (or any other material to be processed) between the rolls 3, 7.

As an example the embossing roll may be held by a servo driven guide rail enabling the roll to be shifted linearly. One or both of the embossing roll and/or the nip roll is rotated by power driven means. As an example, the rolls are rotated in a synchronised fashion wherein the peripheral speed of the rolls are adjusted to the speed of previous and/or succeeding rolls or sets of rolls in a process machine for printing and embossing substrates from a coil. In order to avoid slipping of the plates between the embossing roll and the nip roll, both of the rolls may preferably be driven by synchronised powered means so that the peripheral speed of the rolls is the same. Preferably, the diameter of the rolls is the same. Regular lacquer machines or printing machines which provides a setup of rolls and nip rolls according to the above description exits on the market. However, none of these machines are provided with shims attached to the rolls as described above.

As shown in Fig. 1, a plurality of shims may be attached to the surface of one single embossing roll. In that way the use of the surface area of the roll may be optimised and many replicas may be embossed for each round of the embossing roll. The shims attached to one roll (or tool plane) may be identical or they may be different.

As seen in Fig. 2, the resilient adhesive tape 2 is compassed during the embossing of the hologram into the substrate. The wedge 9 serves for attaching a wrapping sheet to the surface of the roll. In this way it is even faster to change the replica to be embossed by simply removing one wrapping sheet holding a number of shims attached to the sheet by resilient adhesive tape. According to a preferred embodiment, the wrapping holding a number of shims may be provided with sufficient resiliency to provide the flexibility. Thereby the shims may be attached directly to the wrapping sheet and thereby a number of sheets may be replaced simultaneously by replacing the wrapping sheet.

Fig. 3 shows an embodiment of the device wherein the drum is replaced with a stamp capable of moving along a vertical axis towards sheet material 8. The stamp is provided with at least one shim 1 being attached to the stamp by a resilient adhesive tape 2.

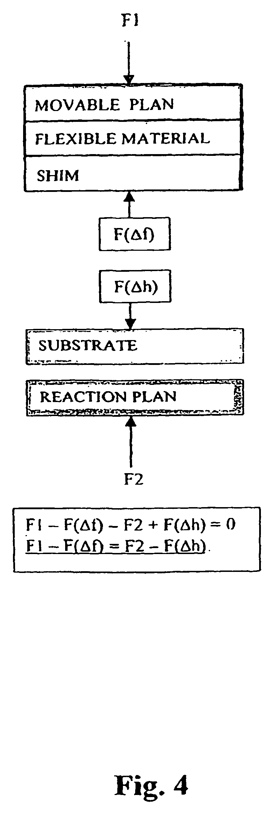

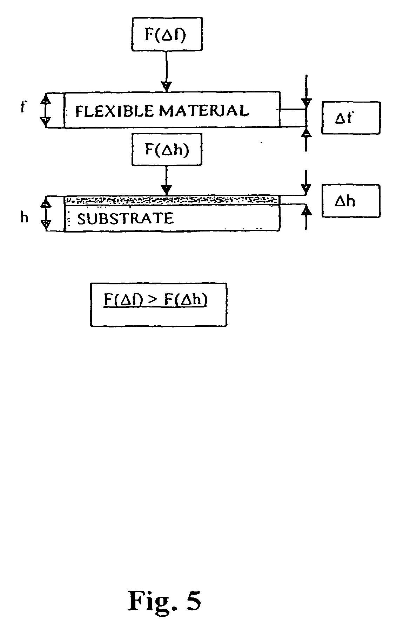

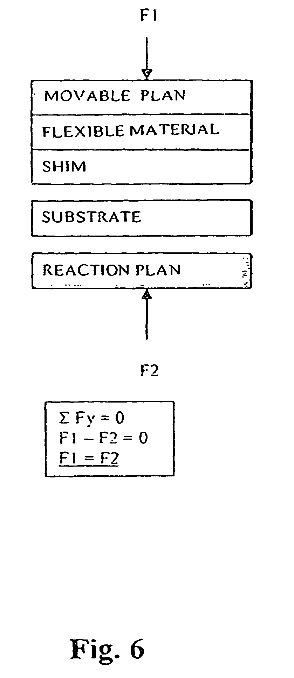

Fig. 4, 5 and 6 show the principles of embossing according to the present invention. Fig. 4 shows the principles of appliying a force from a movable plane, e.g. a drum or stamp through a flexible material, e.g. a resilient adhesive tape, foam rubber or similar resilient means to a tool (shim) for embossing a three dimensional structure into a substrate. The reaction plane serves for providing the necessary counter pressure against the stamp or drum. In Fig. 5, of expresses the force increase resulting from the compression of the resilient tape or similar flexible means. The flexible layer will absorb non-planarity and tolerances of the surface of the substrate. Δh expresses the permanent deformation of the substrate.

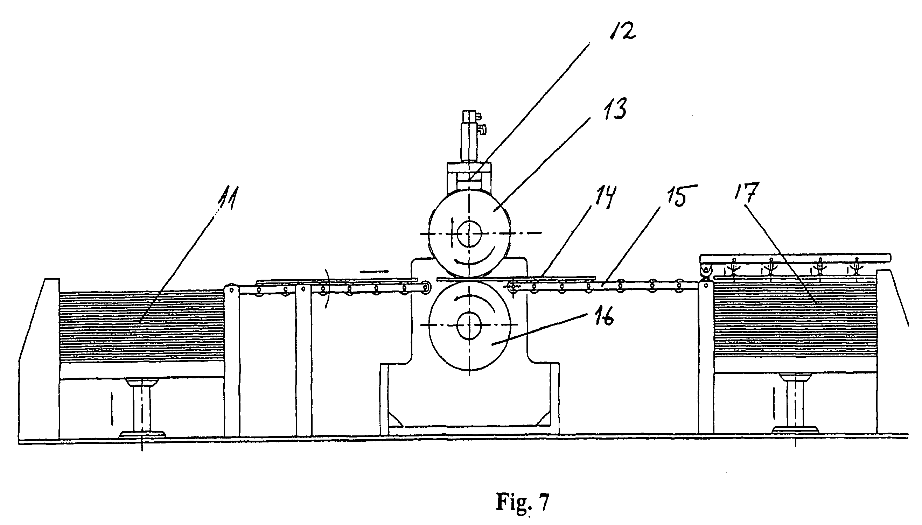

Fig. 7 shows a machine for embossing, the machine comprising a first storage 17 for storing steel plates 14 prior to the embossing, a set of embossing drums 13,16 (a movable plane and a reaction plane) and a second storage 11 for storing the steel plates after the embossing. The steel plates are transported on means 15. The pressure may be adjusted by the adjusting means 12.

## Claims

1. A device for processing a non-planar hard substrate (8), said device having a tool plane (3) and a reaction plane (7), the tool plane (3) comprising a multiple layer construction with:
- a core having an inflexible outer surface, and
- at least one tool (1) being attached to the surface of the core; and
wherein flexible force absorbing means (5) is provided in at least a part of the tool plane (3) and/or the reaction plane (7)
**characterised in that** the flexible force absorbing means comprlses at least one force absorbing layer (5) provided in the multiple layer construction and having a thickness that exceeds a planar deviation δ of the substrate.

2. A device according to claim 1, wherein the flexible fofcie absorbing means (5) Is resilient.

3. A device according to claim 1 or 2, wherein the least one force absorbing layer (5) is attached to the reartfon plane (7).

4. A device according to any of the preceding claims, wherein both the tool plane (3) and the reaction plane (7) are provided with a force absorbing tayer (5).

5. A device according to any of claims 1-4, wherein the flexible force absorbing layer (5) is provided in the multiple tayer construction between the core and the tool (1).

6. A device according to any of the preceding claims, wherein the tool plane (3) and the reaction plane (7) are provided with co-operating edges for cutting the substrate.

7. A device according to any of the preceding claims, wherein at least one of either the tool plane (3) or the reaction plane (7) are adapted to shape at least a first layer of the substrate (8) Into a predefined form.

8. A device according to any of the preceding claims, wherein the tool plane (3) is provided as a stamp for processing at least a first layer of the substrate (8) by stamping.

9. A device according to any of the preceding claims, wherein the tool plane (3) is provided as a drum for rotative processing of at least a first layer of the substrate (8).

10. A device according to any of claims 1-9, wherein the force absorbing layer (5) is selected with a thickness in the range of 0,1-5 mm, such as 0,2-4,5 mm, such as 0,3-4,0 mm such as 0,4-3,5 mm, such as 0,5-3 mm, such as 0,6-2,5 mm, such as 0,7-2,0 mm.

11. A device according to any of the preceding claims, wherein the flexible force absorbing layer (5) is selected with an elasticity enabling the flexible force absorbing layer (5) to provide a force to the substrate (8), which force exceeds the yield point of the substrate (8) at a given rate of compression 7, and wherein the thickness of the flexible force absorbing layer (5) at that rate of compression γ exceeds the planar deviation 8.

12. A device according to any of the claims 1-11, wherein the flexible force absorbing layer (5) is a double sided adhesive tape (2) for attaching the at least one tool (1) to the outer surface of the core.

13. A device according to claim 12, wherein the double sided adhesive tape (2) is selected with a thickness in the range of 0,1-0,5 mm, such as in the range of 0,20-0,4 mm, such as in the range of 0,21-0,3 mm, such as in the range of 0,22-0,26 mm, such as 0,24 mm.

14. A device according to any of the preceding claims, wherein the core is provided with a steel surface.

15. A device according to claim 14, wherein the steel surface is provided with a roughness in the range of 1-100 microns.

16. A device accoriong to any of claim 12-15, wherein the tape (2) is provided with an adhesion to steel in the range of 6-12 N/cm, such as in the range of 7-11 N/cm, such as in the range of 8-10 N/cm, such as 9 H/cm.

17. A device according to any of claims 12-16, wherein the tape (2) is attached to the core by an acrylic based adhesive.

18. A device according to any of claims 12-17, wherein the tool (1) Is attached to the tape (2) by an acrylic based adhesive.

19. A device according to any of claims 12-18, wherein the adhesive layer (2) of the tape is provided with a permanent adhesion so as to enable refitting of tool (3) to the flexible layer (5).

20. A device according to claim 19, wherein the tool (1) comprises one or more shims (1) to be adhered to the adhesive layer.

21. A device according to any of the preceding claims, wherein the processing comprises embossing of a three dimensional structure into the substrate (8).

22. A device according to any of the preceding claims, wherein the processing comprises embossing of a nano-structure into the substrate (8).

23. A device according to any of the preceding claims, wherein the processing comprises embossing of a nano-structure into a metallic substrate (8).

24. A device according to any of the preceding claims, wherein the substrate (8) is selected from the group consisting of lacquers, polymers, printing inks, plastics, carton, cardboard, metal such as tin, aluminium, copper, lead, steel.

25. A device according to any of the preceding claims, wherein the Brinell-hardness of the substrate (8) ranges from 10 N/mm² to 1000 N/mm².

26. A device according to any of claims 9-25, wherein the substrate (8) is a multiple layer substrate with a first layer having a first degree of hardness and succeeding layers having a second degree of hardness, said drum having:
- a core with a inflexible outer surface,
- a flexible force absorbing layer (5) with a third degree of hardness, the flexible force absorbing layer (5) being peripherally attached to the core, and
- a matrix having the three dimensional structure, the matrix being peripherally attached to the flexible force absorbing layer (5),
wherein the flexible force absorbing layer (5) Is selected so that the third degree of hardness is higher than the first degree of hardness and lower than the second degree of hardness.

27. A method for processing a three dimensional structure into a first layer of a non-planar hard substrate (8) by use of a device having a tool plane (3) and a reaction plane (7), the tool plane (3) comprising a multiple layer construction, said method comprising the steps of:
- providing a tool (1) being attached to the surface of a core of the tool plane (3),
- disposing a sheet of the substrate (8) between the tool plane (3) and the reaction plane (7) and
- applying a pressure so as to process the substrate (8)
- **characterised in that** the core of the tool plane (3) is provided with a flexible force absorbing layer (5) having a thickness τ that exceeds a planar deviation δ of the substrate.

## Patentansprüche

1. Vorrichtung zur Bearbeitung eines nicht-planaren harten Substrats (8), wobei die Vorrichtung eine Werkzeugfläche (3) und eine Reaktionsfläche (7) aufweist, wobei die Werkzeugfläche (3) eine mehrschichtige Konstruktion umfasst, mit:
- einem Kern, der eine unflexible äußere Oberfläche aufweist, und
- wenigstens einem Werkzeug (1), das an der Oberfläche des Kerns befestigt ist, und
wobei ein flexibles Kraftaufnahmemittel (5) in wenigstens einem Teil der Werkzeugfläche (3) und/oder der Reaktionsfläche (7) vorgesehen ist,
**dadurch gekennzeichnet, dass** das flexible Kraftaufnahmemittel wenigstens eine Kraftaufnahmeschicht (5) umfasst, die in der mehrschichtigen Konstruktion vorgesehen ist und eine Dicke τ aufweist, welche eine Planaritätsabweichung δ des Substrats übersteigt.

2. Vorrichtung nach Anspruch 1, bei der das flexible Kraftaufnahmemittel (5) elastisch ist.

3. Vorrichtung nach Anspruch 1 oder 2, bei der die wenigstens eine Kraftaufnahmeschicht (5) an der Reaktionsfläche (7) befestigt ist.

4. Vorrichtung nach einem der vorangehenden Ansprüche, bei der die Werkzeugfläche (3) und die Reaktionsfläche (7) beide mit einer Kraftaufnahmeschicht (5) versehen sind.

5. Vorrichtung nach einem der Ansprüche 1-4, bei der die flexible Kraftaufnahmeschicht (5) in der mehrschichtigen Konstruktion zwischen dem Kern und dem Werkzeug (1) vorgesehen ist.

6. Vorrichtung nach einem der vorangehenden Ansprüche, bei der die Werkzeugfläche (3) und die Reaktionsfläche (7) mit zusammenwirkenden Kanten zum Schneiden des Substrats versehen sind.

7. Vorrichtung nach einem der vorangehenden Ansprüche, bei der wenigstens eine von entweder der Werkzeugfläche (3) oder der Reaktionsfläche (7) angepasst ist, um wenigstens eine erste Schicht des Substrats (8) in eine vorbestimmte Form zu formen.

8. Vorrichtung nach einem der vorangehenden Ansprüche, bei der die Werkzeugfläche (13) als Stempel zur Bearbeitung von wenigstens einer ersten Schicht des Substrats (8) durch Stanzen vorgesehen ist.

9. Vorrichtung nach einem der vorangehenden Ansprüche, bei der die Werkzeugfläche (3) als Walze zur drehenden Bearbeitung von wenigstens einer ersten Schicht des Substrats (8) vorgesehen ist.

10. Vorrichtung nach einem der Ansprüche 1-9, bei der die Kraftaufnahmeschicht (5) mit einer Dicke im Bereich von 0,1-5 mm, wie 0,2-4,5 mm, wie 0,3-4,0 mm, wie 0,4-3,5 mm, wie 0,5-3 mm, wie 0,6-2,5 mm, wie 0,7-2,0 mm ausgewählt ist.

11. Vorrichtung nach einem der vorangehenden Ansprüche, bei der die flexible Kraftaufnahmeschicht (5) mit einer Elastizität ausgewählt ist, die es der flexiblen Kraftaufnahmeschicht (5) ermöglicht, eine Kraft zum Substrat (8) zu liefern, welche Kraft die Fließgrenze des Substrats (8) bei einer gegebenen Kompressionsrate γ übersteigt, wobei die Dicke der flexiblen Kraftaufnahmeschicht (5) bei dieser Kompressionsrate γ die Planaritätsabweichung δ übersteigt.

12. Vorrichtung nach einem der Ansprüche 1-11, bei der die flexible Kraftaufnahmeschicht (5) ein doppelseitiges Klebeband (2) zur Befestigung des wenigstens einen Werkzeugs (1) an der äußeren Oberfläche des Kerns ist.

13. Vorrichtung nach Anspruch 12, bei der das doppelseitige Klebeband (2) mit einer Dicke im Bereich von 0,1-0,5 mm, wie im Bereich von 0,20-0,4 mm, wie im Bereich von 0,21-0,3 mm, wie im Bereich von 0,22-0,26 mm, wie 0,24 mm ausgewählt ist.

14. Vorrichtung nach einem der vorangehenden Ansprüche, bei der der Kern mit einer Stahloberfläche versehen ist.

15. Vorrichtung nach Anspruch 14, bei der die Stahloberfläche mit einer Rauhigkeit im Bereich von 1-100 Mikron versehen ist.

16. Vorrichtung nach einem der Ansprüche 12-15, bei der das Band (2) mit einer Haftung an Stahl im Bereich von 6-12 N/cm, wie im Bereich von 7-11 N/cm, wie im Bereich von 8-10 N/cm, wie 9 N/cm versehen ist.

17. Vorrichtung nach einem der Ansprüche 12-16, bei der das Band (2) am Kern mittels eines Klebers auf Acrylbasis befestigt ist.

18. Vorrichtung nach einem der Ansprüche 12-17, bei der das Werkzeug (1) am Band (2) mittels eines Klebers auf Acrylbasis befestigt ist.

19. Vorrichtung nach einem der Ansprüche 12-18, bei der die Kleberschicht (2) des Bandes mit einer permanenten Haftung versehen ist, so dass ein Wiederanbringen des Werkzeugs (1) an der flexiblen Schicht (5) ermöglicht wird.

20. Vorrichtung nach Anspruch 19, bei der das Werkzeug (1) ein oder mehrere Plättchen (1) zum Festkleben an der Kleberschicht umfasst.

21. Vorrichtung nach einem der vorangehenden Ansprüche, bei der die Bearbeitung ein Prägen einer dreidimensionalen Struktur in das Substrat (8) umfasst.

22. Vorrichtung nach einem der vorangehenden Ansprüche, bei der die Bearbeitung ein Prägen einer Nanostruktur in das Substrat (8) umfasst.

23. Vorrichtung nach einem der vorangehenden Ansprüche, bei der die Bearbeitung ein Prägen einer Nanostruktur in ein metallisches Substrat (8) umfasst.

24. Vorrichtung nach einem der vorangehenden Ansprüche, bei der das Substrat (8) aus der Gruppe bestehend aus Lacken, Polymeren, Druckfarben, Kunststoffen, Karton, Pappe, Metall, wie Zinn, Aluminium, Kupfer, Blei, Stahl, ausgewählt ist.

25. Vorrichtung nach einem der vorangehenden Ansprüche, bei der die Brinell-Härte des Substrats (8) zwischen 10 N/mm² und 1000 N/mm² liegt.

26. Vorrichtung nach einem der Anspreiche 9-25, bei der das Substrat (8) ein mehrschichtiges Substrat mit einer ersten Schicht mit einem ersten Härtegrad und nachfolgenden Schichten mit einem zweiten Härtegrad ist, wobei die Walze aufweist:
- einen Kern mit einer unflexiblen äußeren Oberfläche,
- eine flexible Kraftaufnahmeschicht (5) mit einem dritten Härtegrad, wobei die flexible Kraftaufnahmeschicht (5) umfänglich am Kern befestigt ist, und
- eine Matrix mit der dreidimensionalen Struktur, wobei die Matrix umfänglich an der flexiblen Kraftaufnahmeschicht (5) befestigt ist,
wobei die flexible Kraftaufnahmeschicht (5) so ausgewählt ist, dass der dritte Härtegrad höher als der erste Härtegrad und niedriger als der zweite Härtegrad ist.

27. Verfahren zur Einarbeitung einer dreidimensionalen Struktur in eine erste Schicht eines nicht-planaren harten Substrats (8) durch Verwendung einer Vorrichtung mit einer Werkzeugfläche (3) und einer Reaktionsfläche (7), wobei die Werkzeugfläche (3) eine mehrschichtige Konstruktion umfasst, wobei das Verfahren die Schritte umfasst:
- Bereitstellen eines Werkzeugs (1), das an der Oberfläche eines Kerns der Werkzeugfläche (3) befestigt wird,
- Anordnen einer Lage des Substrats (8) zwischen der Werkzeugfläche (3) und der Reaktionsfläche (7), und
- Aufbringen von Druck, so dass das Substrat (8) bearbeitet wird,
- **dadurch gekennzeichnet, dass** der Kern der Werkzeugfläche (3) mit einer flexiblen Kraftaufnahmeschicht (5) versehen wird, die eine Dicke τ aufweist, welche eine Planaritätsabweichung δ des Substrats übersteigt.

## Revendications

1. Dispositif pour traiter un substrat dur non plan (8), ledit dispositif présentant un plan de fabrication (3) et un plan de réaction (7), le plan de fabrication (3) présentant une structure en couches multiples comprenant :
- un noyau présentant une surface extérieure rigide ; et
- au moins un outil (1) attaché à la surface du noyau ; et
dans lequel un moyen d'absorption de force flexible (5) est prévu dans au moins une partie du plan de fabrication (3) et/ou du plan de réaction (7),
**caractérisé en ce que** le moyen d'absorption de force flexible comprend au moins une couche d'absorption de force (5) prévue dans la structure en couches multiples et présente une épaisseur τ excédant une déviation planaire δ du substrat.

2. Dispositif selon la revendication 1, dans lequel le moyen d'absorption de force flexible (5) est élastique.

3. Dispositif selon la revendication 1 ou 2, dans lequel la et au moins une couche d'absorption de force (5) est attachée au plan de réaction (7).

4. Dispositif selon l'une quelconque des revendications précédentes, dans lequel le plan de fabrication (3) et le plan de réaction (7) comportent tous les deux une couche d'absorption de force (5).

5. Dispositif selon l'une quelconque des revendications 1 à 4, dans lequel la couche d'absorption de force (5) est prévue dans la structure en couches multiples entre le noyau et l'outil (1).

6. Dispositif selon l'une quelconque des revendications précédentes, dans lequel le plan de fabrication (3) et le plan de réaction (7) sont pourvus de bords coopérants pour couper le substrat.

7. Dispositif selon l'une quelconque des revendications précédentes, dans lequel au moins soit le plan de fabrication (3), soit le plan de réaction (7) est adapté pour former au moins une première couche du substrat (8) selon une forme prédéfinie.

8. Dispositif selon l'une quelconque des revendications précédentes, dans lequel le plan de fabrication (3) est constitué par un poinçon pour traiter au moins une première couche du substrat (8) par estampage.

9. Dispositif selon l'une quelconque des revendications précédentes, dans lequel le plan de fabrication (3) est constitué par un tambour pour réaliser un traitement rotatif d'au moins une première couche du substrat (8).

10. Dispositif selon l'une quelconque des revendications 1 à 9, dans lequel la couche d'absorption de force (5) est sélectionnée avec une épaisseur comprise dans la gamme allant de 0,1 à 5 mm, par exemple de 0,2 à 4,5 mm, par exemple de 0,3 à 4,0 mm, par exemple de 0,4 à 3,5 mm, par exemple de 0,5 à 3 mm, par exemple de 0,6 à 2,5 mm, par exemple de 0,7 à 2,0 mm.

11. Dispositif selon l'une quelconque des revendications précédentes, dans lequel la couche d'absorption de force flexible (5) est sélectionnée avec une élasticité permettant à la couche d'absorption de force flexible (5) de fournir une force sur le substrat (8), ladite force dépassant la limite d'élasticité du substrat (8) à un taux de compression γ donnée, et dans lequel l'épaisseur de la couche d'absorption de force flexible (5) à ce taux de compression γ dépasse la déviation planaire 8.

12. Dispositif selon l'une quelconque des revendications 1 à 11, dans lequel la couche d'absorption de force flexible (5) est un ruban adhésif double-face (2) servant à fixer le et au moins un outil (1) sur la surface extérieure du noyau.

13. Dispositif selon la revendication 12, dans lequel le ruban adhésif double-face (2) est sélectionné avec une épaisseur comprise dans la gamme allant de 0,1 à 0,5 mm, par exemple dans la gamme allant de 0,20 à 0,4 mm, par exemple dans la gamme allant de 0,21 à 0,3 mm, par exemple dans la gamme allant de 0,22 à 0,26 mm, par exemple 0,24 mm.

14. Dispositif selon l'une quelconque des revendications précédentes, dans lequel le noyau présente une surface d'acier.

15. Dispositif selon la revendication 14, dans lequel la rugosité de la surface d'acier est comprise dans la gamme allant de 1 à 100 microns.

16. Dispositif selon l'une quelconque des revendications 12 à 15, dans lequel le ruban (2) est **caractérisé par** une adhérence à l'acier comprise dans la gamme allant de 6 à 12 N/cm, par exemple dans la gamme allant de 7 à 11 N/cm, par exemple dans la gamme allant de 8 à 10 N/cm, par exemple de 9 N/cm.

17. Dispositif selon l'une quelconque des revendications 12 à 16, dans lequel le ruban (2) est fixé au noyau par un adhésif à base d'acrylique.

18. Dispositif selon l'une quelconque des revendications 12 à 17, dans lequel l'outil (1) est fixé au ruban (2) par un adhésif à base d'acrylique.

19. Dispositif selon l'une quelconque des revendications 12 à 18, dans lequel la couche adhésive (2) du ruban présente une adhérence permanente permettant de procéder à un réajustement de l'outil (1) sur la couche flexible (5).

20. Dispositif selon la revendication 19, dans lequel l'outil (1) comprend une ou plusieurs cale(s) (1) à coller sur la couche adhésive.

21. Dispositif selon l'une quelconque des revendications précédentes, dans lequel le traitement comprend le gaufrage d'une structure tridimensionnelle dans le substrat (8).

22. Dispositif selon l'une quelconque des revendications précédentes, dans lequel le traitement comprend le gaufrage d'une nano-structure dans le substrat (8).

23. Dispositif selon l'une quelconque des revendications précédentes, dans lequel le traitement comprend le gaufrage d'une nano-structure dans un substrat métallique (8).

24. Dispositif selon l'une quelconque des revendications précédentes, dans lequel le substrat (8) est sélectionné dans le groupe comprenant des laques, des polymères, des encres d'impression, des plastiques, du carton, du cartonnage et du métal tel que l'étain, l'aluminium, le cuivre, le plomb et l'acier.

25. Dispositif selon l'une quelconque des revendications précédentes, dans lequel la dureté Brinell du substrat est comprise entre 10 N/mm² et 1000 N/mm².

26. Dispositif selon l'une quelconque des revendications 9 à 25, dans lequel le substrat (8) est un substrat en couches multiples comprenant une première couche présentant un premier degré de dureté et des couches successives présentant un deuxième degré de dureté, ledit tambour comprenant :
- un noyau présentant une surface extérieure rigide ;
- une couche d'absorption de force flexible (5) présentant un troisième degré de dureté, la couche d'absorption de force flexible (5) étant fixée périphériquement au noyau ; et
- une matrice présentant la structure tridimensionnelle, la matrice étant fixée périphériquement sur la couche d'absorption de force flexible (5),
dans lequel la couche d'absorption de force flexible (5) est sélectionnée de telle sorte que le troisième degré de dureté soit supérieur au premier degré de dureté et inférieur au deuxième degré de dureté.

27. Procédé pour traiter une structure tridimensionnelle en une première couche d'un substrat dur non plan (8) en utilisant un dispositif présentant un plan de fabrication (3) et un plan de réaction (7), le plan de fabrication (3) présentant une structure en couches multiples, ledit procédé comprenant les étapes consistant à :
- fournir un outil (1) fixé sur la surface d'un noyau du plan de fabrication (3) ;
- disposer une feuille du substrat (8) entre le plan de fabrication (3) et le plan de réaction (7) ; et
- appliquer une pression pour traiter le substrat (8),
**caractérisé en ce que** le noyau du plan de fabrication (3) comprend une couche d'absorption de force flexible (5) présentant une épaisseur τ excédant une déviation planaire δ du substrat.
